# EUROPÄISCHE PATENTSCHRIFT

(11) **EP 2 223 792 B1**
(45) Veröffentlichungstag und Bekanntmachung des Hinweises auf die Patenterteilung: **23.03.2011**
(21) Anmeldenummer: 10001685.6
(22) Anmeldetag: 19.02.2010
(51) Int. Cl.: B29C 65/16, B29C 47/88, B29C 47/00, B26D 3/16

(54) **Verfahren zur Herstellung und Ummantelung von Kunststoffrohren oder Metallrohren**
Method for producing and coating plastic or metal tubes
Procédé de fabrication et de gainage de tuyaux en plastique ou de tuyaux métalliques

(30) Priorität: 26.02.2009 DE 102009010396
(43) Veröffentlichungstag der Anmeldung: 01.09.2010
(73) Patentinhaber: egeplast Werner Strumann GmbH & Co. KG, 48268 Greven (DE)
(72) Erfinder: Ulrich, Herbert, 48282 Emsdetten (DE)
(74) Vertreter: Fritz & Brandenburg Patentanwälte

(56) Entgegenhaltungen:
- EP-A1- 1 115 550
- EP-A1- 1 386 104
- GB-A- 1 365 881
- US-A- 2 722 263

## Beschreibung

Die vorliegende Erfindung betrifft ein Verfahren zur Herstellung von Kunststoffrohren oder Kunststoff/Metall-Verbundrohren, bei dem man wenigstens ein Verstärkungsmaterial in Form von Bändern oder Fasern oder Profilen/Hohlprofilen auf einen extrudierten zylindrischen Rohrkern aus Kunststoff oder zugeführte Metallstangen wickelt, wobei der Rohrkern (metallische Kern) während des Wickelvorgangs axial in Längsrichtung vorgeschoben wird und gleichzeitig um seine Längsachse rotiert. Das erfindungsgemäße Verfahren eignet sich auch zur kontinuierlichen Herstellung von Wickelrohren.

Es sind aus dem Stand der Technik verschiedene Verfahren bekannt, mittels derer sich Kunststoffrohre mit Verstärkungsschichten herstellen lassen, indem beispielsweise Bänder oder Fasern aus einem verstärkenden Material auf einen zylindrischen Kern aus einem Kunststoffbasismaterial gewickelt werden. Bei einem Verfahren wie es in der EP 1 386 104 B1 beschrieben ist, werden auf einen zylindrischen Rohrkern spiralförmig Verstärkungsbänder aus einem orientierten Kunststoff aufgewickelt. Durch die Verwendung dieser orientierten Verstärkungsbänder kann man ein für höhere Druckbelastungen (Innendrücke) ausgelegtes Rohr herstellen, welches eine geringere Wandstärke aufweist als ein vergleichbares aus dem Kunststoff des Basismaterials extrudiertes Rohr. Somit lässt sich eine erhebliche Materialersparnis erzielen. In der Regel wird bei diesem bekannten Verfahren so vorgegangen, dass der zuvor extrudierte Rohrkern nur axial vorgeschoben wird und das aufzuwickelnde Band von einer Rolle etwa in Querrichtung zur Vorschubrichtung zugeführt wird und sich dann die Wickelvorrichtung mit der Rolle von der das Band abgezogen wird, um den Rohrkern dreht. Es kann sein, dass die Wickelvorrichtung mehrere über den Umfang versetzt angeordnete Wickelrollen mit Bändern umfasst. Die Bänder werden spiralförmig in einem Winkel zur Vorschubachse auf dem Rohrkern Stoß an Stoß gewickelt. Nimmt der Durchmesser des Rohrkerns zu, werden auch die aufzuwickelnden Bänder breiter und gegebenenfalls auch deren Materialstärke dicker. Rohre mit größerem Durchmesser haben generell auch eine größere Wandstärke. Mit zunehmendem Rohrdurchmesser des zu fertigenden Rohrs nehmen Dimension und Gewicht der Wickelvorrichtung und deren Wickelrollen zu. Der maschinenbauliche Aufwand um die ganze Wickelvorrichtung um das Kernrohr rotieren zu lassen wird daher bei größeren Rohren ganz erheblich und es gibt hier Grenzen, wo sich diese Technik nicht mehr mit vertretbarem Aufwand realisieren lässt.

Bei stärkeren und breiteren Bändern nimmt bei noch vertretbarer Größe der Wickelrolle die Länge des Bandes, welches insgesamt auf einer Rolle vorgehalten werden kann ab. Bei einem Verfahren, bei dem das Kernrohr kontinuierlich extrudiert und daher kontinuierlich zugeführt wird, muss bei einem Wechsel der Wickelrolle die Anlage angehalten werden. Zudem lässt sich der Rollenwechsel bei größeren Rollen aufgrund des Gewichts nicht mehr von Hand durchführen, so dass maschinelle Einrichtungen für den Rollenwechsel notwendig werden. Das Anhalten einer derartigen Anlage führt zu Produktionsausfall und da eine kontinuierliche Produktion mit hohem Ausstoß angestrebt wird, ist bei einer solchen Anlage jeglicher Stillstand aus Kostengründen zu vermeiden.

Es sind auch bereits Verfahren bekannt geworden, bei denen man ein rohrfömiges Werkstück während seines Längsvorschubs gleichzeitig um die Längsachse dreht und man dann ein Band helikal auf dieses sich drehende rohrförmige Werkstück aufwickelt. In diesem Fall muss die Wickelvorrichtung nicht um das Rohr rotieren, da sich das Rohr dreht. Ein derartiges Verfahren ist in der britischen Patentschrift GB 1 365 881 beschrieben. Wenn jedoch der Rohrkern ein kontinuierlich durch Extrusion hergestellter Rohrstrang ist, der der Wickelvorrichtung ununterbrochen zugeführt wird, kann man den Rohrkern für den Wickelvorgang nicht drehen, es sei denn, man würde auch den Extruder rotieren lassen. Dies erfordert jedoch den Einsatz spezieller Extruder und kommt für eine bestehende Extrusionlinie mit herkömmlichem Extruder nicht in Betracht.

In den Ausführungsbeispielen der genannten Schrift wird daher das Kernrohr nicht kontinuierlich der Wickelvorrichtung zugeführt wird, sondern es wird als Träger ein aus aneinander gereihten zylindrischen Elementen bestehender zylindrischer Kern verwendet, der in Rotation versetzt wird. Dieser Kern ist zwar durch die zylindrischen Elemente axial verlängerbar, hat aber ein Kopfende, so dass sich eine endliche Länge des produzierten rohrförmigen Gegenstands ergibt und das Verfahren nicht kontinuierlich ist. Der in der Regel metallische Kern wird bei dieser Vorgehensweise nach dem Herstellvorgang aus dem Rohr entfernt. Bei diesem bekannten Verfahren werden zudem recht aufwändige Einrichtungen verwendet, die dazu dienen, das rohrförmige Werkstück gleichzeitig in rotierende und Vorschubbewegung zu versetzen. Wenn mehrere Lagen Bänder aufgewickelt werden, muss wegen der Zunahme des Durchmessers nach der ersten Wicklung jeweils ein weiterer Antrieb für Drehung und Vorschub verwendet werden.

*Aus der* US 2 722 263 A *ist ein Verfahren zur Herstellung eines flexiblen Schlauchs gemäß dem Oberbegriff des Anspruchs 1 bekannt geworden. Bei diesem Verfahren werden Bänder extrudiert, in die ein Verstärkungsdraht einextrudiert wird und die dann spiralförmig auf einen sich drehenden Rohrkern gewickelt werden. Der Rohrkern wird hier zunächst in endlichen Längen gefertigt, die dann miteinander verbunden werden müssen. Es wird jedoch angestrebt, das Endprodukt, das heißt den flexiblen verstärkten Schlauch, kontinuierlich in endlosen Längen herzustellen.*

Die Aufgabe der vorliegenden Erfindung besteht darin, ein Verfahren zur Herstellung von Kunststoffrohren oder Kunststoff/Metall-Verbundrohren der eingangs genannten Gattung zur Verfügung zu stellen, welches die Herstellung von mit Verstärkungsmaterial umwickelten Rohren in einem kontinuierlichen Prozess ermöglicht, bei dem der Rohrkern aus Kunststoff extrudiert wird, Bestandteil des fertigen Rohres wird und der Rohrkern in einer herkömmlichen nicht drehenden Extrusionsvorrichtung endlos extrudiert wird.

Die Lösung dieser Aufgabe liefert ein Verfahren zur Herstellung von Kunststoffrohren oder Kunststoff/Metall-Verbundrohren der eingangs genannten Gattung mit den kennzeichnenden Merkmalen des Hauptanspruchs.

Erfindungsgemäß ist vorgesehen, dass man zunächst den Rohrkern aus Kunststoff kontinuierlich und endlos extrudiert, wobei dieser zunächst nur axialen Vorschub aufweist, man dann den Rohrkern durchtrennt, das abgetrennte Rohrstück in Rotation versetzt und bei gleichzeitigem axialen Vorschub wenigstens eine Lage Verstärkungsmaterial auf das Rohrstück spiralförmig aufwickelt, man danach nur die Umwicklung an der Trennstelle des umwickelten Rohrkerns durchtrennt und man dann das abgetrennte umwickelte Rohrstück bei andauerndem rein axialen Vorschub durch Aufextrudieren mit einer wenigstens einer äußeren Kunststoffschicht überzieht.

Erfindungsgemäß wird also zunächst ein Rohrkern aus Kunststoff endlos extrudiert, welcher durch eine geeignete Abzugsvorrichtung einen rein axialen Vorschub erhält. Nach einer vorbestimmten Distanz wird dieser Rohrkern durchtrennt, wobei jedoch der Extrusionsvorgang fortgesetzt wird, so dass am Rohrkopf des Extruders weiter Rohrkern produziert und auch axial in Längsrichtung gefördert wird. Der abgetrennte vordere Bereich liegt dann in Form einer Rohrstange vor, die mittels eines Drallabzugs erfasst und in Rotation versetzt wird und dabei gleichzeitig weiter in Längsrichtung gefördert wird. Am vorderen Ende dieser Rohrstange wird mittels eines Wicklers das Verstärkungsmaterial beispielsweise in Band- oder Faserform auf den sich drehenden Rohrkern spiralförmig aufgewickelt. Dieses Verstärkungsmaterial kann aus Kunststoff oder gegebenenfalls auch aus Metall bestehen, beispielsweise eine Metallfolie in Bandform, ein Kunststoffband oder dergleichen. Die sich drehende Rohrstange wird durch den aus dem Extruder austretenden Rohrkernstrang axial weiter geschoben, so dass im Bereich der jeweiligen Stirnseiten eine gewisse Reibung entsteht, was jedoch unerheblich ist.

Nachdem die vordere Rohrstange vollständig mit Verstärkungsmaterial umwickelt ist, erfolgt ein erneuter Trennvorgang und zwar wird dabei das umwickelte Verstärkungsmaterial dort durchtrennt, wo sich die Trennstelle des Rohrkerns befindet. Dies lässt sich technisch über eine Streckenverfolgung der Extrusionslinie bewerkstelligen. Die umwickelte vordere Rohrstange ist dann von dem nachfolgenden sich drehenden Rohrstrang getrennt, wird dann danach beispielsweise über einen Abzug wieder ausschließlich axial vorgeschoben und kann mittels eines zweiten Extruders mit einer Mantelschicht aus Kunststoff überzogen werden. Nach Abkühlung des Kunststoffmantels wird dort, wo sich die Trennstelle in dem umwickelten Rohrkern befindet, die Mantelschicht durchtrennt und man erhält ein Verbundrohr mit Kernschicht, gewickelter Verstärkungslage und Mantelschicht in der gewünschten Rohrlänge. Alle Stationen der Produktionslinie können dabei kontinuierlich weiter arbeiten und die Rohrstangen in den verschiedenen Verarbeitungsstadien, nämlich extrudiertes Kernrohr, sich drehende Kernrohrstange während des Wickelvorgangs und umwickelte Kernrohrstange während des Ummantelungsvorgangs werden stetig in axialer Richtung durch die Produktionslinie gefördert. Es wird somit eine völlig kontinuierlich arbeitende Produktionslinie geschaffen. Es ist weder notwendig, einen Kern, auf den gewickelt wurde zu entfernen, noch ist es erforderlich, die Extrusion des Kernrohrs in separater Linie durchzuführen und bei der Wickelstation mit einem Rohranfang zu beginnen, der auf einen Kern aufgezogen und in Drehung versetzt wird.

Nach dem erfindungsgemäßen Verfahren werden also mehrschichtige Rohre mit Verstärkungsschichten hergestellt, bei denen der Kern im Endprodukt verbleibt. Mit Kernrohr wird somit hierin die innerste Schicht oder die innersten Schichten bezeichnet, auf die gewickelt wird, während im Stand der Technik bei Wickelrohren in der Regel der Kern später entfernt wird, so dass der Kern nur als Hilfsmittel für den Wickelvorgang dient.

Nach dem erfindungsgemäßen Verfahren kann man beispielsweise zunächst eine erste Verstärkungsschicht aufwickeln und nach einem Trennschritt auf das bereits mit wenigstens einer ersten Lage Verstärkungsmaterial umwickelte Rohrstück wenigstens eine zweite Lage Verstärkungsmaterial spiralförmig aufwickelt, wobei man bei axialem Vorschub das Rohrstück in Rotation im entgegengesetzten Drehsinn zum ersten Wickelvorgang versetzt. Aufgrund des Trennschritts entsteht für den Wickelvorgang ein Rohrstück und die Extrusion des Kernrohrs kann kontinuierlich weiterlaufen. Durch den axialen Vorschub des Kernrohrs kann auch das sich drehende Rohrstück vorgeschoben werden. Man kann auch beim Wickeln einen eigenen Drallabzug verwenden, der das Rohrstück gleichzeitig dreht und für den axialen Vorschub sorgt, wobei dieser natürlich synchronisiert wird mit dem Abzug des Kernrohrs. Bei mehreren Wickelvorgängen trennt man nach dem ersten Wickelvorgang, wodurch separate sich axial weiter durch die Produktionslinie schiebende Rohrstücke entstehen, die man auch mit unterschiedlichem Drehsinn drehen kann. Der Vorteil liegt somit darin, dass die Wickelschritte in eine kontinuierlich arbeitende Extrusionslinie integriert werden. Nach einem oder mehreren Wickelschritten erfolgt erneut ein Trennvorgang, wobei nur die äußere Verstärkungsschicht dort durchtrennt werden muss, wo das Rohrstück des Kernrohrs endet, so dass dann umwickelte Rohrstangen erhalten werden, von denen sich in Längsrichtung der Produktionslinie gesehen eine an die andere anschließt.

Diese umwickelten und somit verstärkten Rohrstangen kann man dann beispielsweise einer weiteren Verarbeitung zuführen. Beispielsweise kann man wenigstens eine metallische Folie auf das Rohrstück aufwickeln oder man kann die mit einer Verstärkungsschicht umwickelten Rohrstücke mit einer oder mehreren äußeren Kunststoffschichten ummanteln. Derartige Kunststoffschichten können aufextrudiert werden, beispielsweise um eine glatte äußere Schicht und/oder eine Schutzschicht zu schaffen. Der Vorteil ist auch hier, dass das Aufextrudieren innerhalb der Extrusionslinie erfolgen kann, das heißt dem dafür verwendeten Extruder werden die umwickelten Rohrstangen nacheinander zugeführt.

Es kann gemäß einer Weiterbildung der Erfindung auch beispielsweise vorgesehen sein, dass, nachdem man diese mit wenigstens einer durch Aufextrudieren aufgebrachten Kunststoffschicht ummantelt hat, die Rohrstangen mit einer Metallfolie, zum Beispiel einer Aluminiumfolie umwickelt werden. Danach kann man erneut mit einer durch Aufextrudieren aufgebrachten Kunststoffschicht ummanteln. In den verschiedenen Ummantelungsvorgängen können gegebenenfalls unterschiedliche Kunststoffe verwendet werden, beispielsweise Polyolefine wie Polyethylen, Polypropylen etc. Anders als bei bisherigen Verfahren wird nicht ein durchgehender Rohrstrang in einem weiteren Extruder ummantelt, sondern eine Reihe aufeinanderfolgender Rohrstücke wird mit einem durchgehenden Kunststoffmantel überzogen. Dies lässt sich technisch problemlos bewerkstelligen und hat den Vorteil, dass die Anlage auch bei der Ummantelung kontinuierlich arbeiten kann. Durch einen Trennschritt kann danach immer dort wo sich die Trennung der Rohrstücke befindet der Mantel durchtrennt werden, wodurch ummantelte Rohrstücke erhalten werden.

Im Stand der Technik war es bislang so, dass Verstärkungsmaterialien wie beispielsweise Kunststoffbänder separat hergestellt und danach auf Rollen gelagert wurden und diese Rollen dann an der Extrusionslinie installiert wurden, wobei dann beim Wickelvorgang das Kunststoffband von der Rolle abgewickelt wurde. Eine Weiterbildung des erfindungsgemäßen Verfahrens sieht nun vor, dass das aufzuwickelnde Verstärkungsmaterial vor Ort mittels einer eigenen Extrusionsvorrichtung extrudiert wird, gegebenenfalls abgekühlt und gegebenenfalls in weiteren Schritten bearbeitet wird und in situ unmittelbar nach der Herstellung der Extrusionslinie in etwa quer zur Vorschubrichtung des Rohrstücks zugeführt wird. Es entfällt somit der Schritt der Einlagerung der Rollen mit dem Verstärkungsmaterial und deren innerbetrieblicher Transport zur Wickelvorrichtung. Da erfindungsgemäß nicht mehr die Rollen mit der ganzen Wickelvorrichtung um das zu umwickelnde Rohr gedreht werden, sondern vielmehr das Rohr selbst gedreht wird, ist es nun überhaupt erst möglich geworden, das Verstärkungsmaterial im Bereich der Extrusionslinie herzustellen und kontinuierlich für den Wickelvorgang zuzuführen.

Die Extrusionslinie für das Verstärkungsmaterial kann beispielsweise parallel neben der Hauptextrusionslinie errichtet werden, da man so bei entsprechender Länge der Linie den Raum in einer Produktionshalle besser nutzen kann. Danach kann man die frisch produzierten Verstärkungsbänder in einem Bogen umlenken und dann etwa quer in dem geforderten Winkel (beispielsweise etwa 55 °) der Hauptextrusionslinie zuführen für den Wickelvorgang.

Das Verstärkungsmaterial, zum Beispiel flache Verstärkungsbänder aus Kunststoff, muss nach der Extrusion lediglich soweit abgekühlt werden, dass es formstabil ist und eine Temperatur aufweist, die nicht zu hoch ist, um den Wickelvorgang nicht zu beeinträchtigen. Besonders geeignet sind Verstärkungsbänder, die nach der Extrusion verstreckt werden, um eine Orientierung in Längsrichtung und damit eine höhere Festigkeit zu erhalten. Solche Verstärkungsbänder kann man beispielsweise mittels Laserstrahlung nach dem Wickeln mit der Oberfläche des Kernrohrs Verschweißen. Dies hat den Vorteil, dass dabei das Band allenfalls bereichsweise erwärmt wird und die Orientierung des Bandes erhalten bleibt. Bei der sonst üblichen Erwärmung in einem Ofen wäre dies hingegen nicht der Fall. Alle diese Schritte, nämlich Herstellung des Verstärkungsmaterials zum Beispiel durch Extrusion, Abkühlung, Verstrecken und Zuführen zur Extrusionslinie für den Wickelvorgang können kontinuierlich erfolgen. Die Herstellung des Verstärkungsmaterials und dessen Verarbeitung quasi in situ haben auch den Vorteil, dass die Anlage über einen langen Zeitraum kontinuierlich arbeiten kann, da es nicht mehr erforderlich ist, die Rollen, auf denen die Verstärkungsbänder aufgewickelt sind zu wechseln und dazu die Anlage anzuhalten.

Eine bevorzugte Weiterbildung der Erfindung sieht vor, dass man während der laufenden Extrusion den Durchmesser und/oder die Wandstärke des extrudierten Rohrkerns um Dimensionen, insbesondere um einen Faktor 1,2 bis 2 vergrößert oder verkleinert und alle durchmesserabhängigen Einrichtungen in den nachfolgenden Stationen der Anlage, insbesondere Dichtungen, Abzüge, Sägen, Wickelvorrichtung, Rohrkopf des Extruders in der Aufextrusionsanlage über eine zentrale Steuerung an den neuen Rohrdurchmesser anpasst. Dies ermöglicht es, dass man selbst dann, wenn die Herstellung eines um eine Größenordnung im Durchmesser und/oder in der Wandstärke abweichenden Rohrs gewünscht ist, die Anlage nicht anhalten muss, sondern den Prozess kontinuierlich fortsetzt. Entsprechende Extrusionsanlagen, die dies bei einem Kernrohr ermöglichen, sind beispielsweise aus der EP 1 115 550 B1 bekannt geworden. Dort ist aber keine Umwicklung eines extrudierten Rohrs vorgesehen. Wenn man den Durchmesser eines zu umwickelnden extrudierten Rohrs beispielsweise um den Faktor 1,5 vergrößert, muss man auch die Breite der Bänder und/oder deren Materialstärke anpassen. Die Weiterentwicklung der Erfindung sieht nun vor, dass man beispielsweise über eine zentrale Steuerung auf die Wickelvorrichtung einwirkt, um das Verstärkungsmaterial entsprechend einer funktionellen Abhängigkeit vom Durchmesser des Rohrkerns zu verändern. Wird zum Beispiel ein Verstärkungsband in situ extrudiert und dann auf den Rohrkern aufgewickelt, berechnet die Steuerung die entsprechenden Werte und verstellt dann die Extrusionsvorrichtung im Bereich der Extruderdüse in gewünschter Weise, indem Breite und Höhe des Verstärkungsbands angepasst werden. Hierbei gibt es eine Übergangsphase während des Verstellvorgangs, bis die neuen Werte eingestellt sind. In dieser Phase lässt man die Anlage einfach weiterlaufen und entfernt später den entsprechenden (beim Kernrohr konischen) Abschnitt des Rohrs durch Abtrennen als Ausschuss.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:

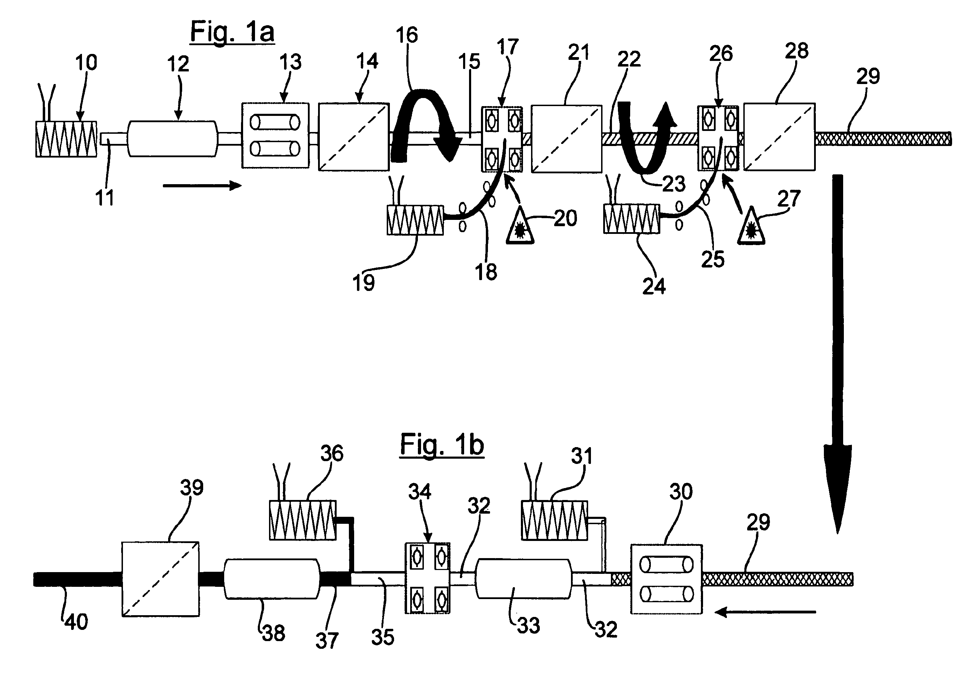

Figur 1 a eine schematische Darstellung eines ersten Teils einer beispielhaften erfindungsgemäßen Anlage;
Figur 1b eine ergänzende schematische Darstellung eines zweiten Teils der beispielhaften Anlage von Figur 1a.

Zunächst wird auf die Figur 1 a Bezug genommen. Diese zeigt ein Anlagenschema einer ersten Teilstrecke einer erfindungsgemäßen Anlage. In der Zeichnung ganz links ist eine Extrusionsvorrichtung 10 gezeigt, mittels derer beispielsweise ein Kernrohr 11 aus Kunststoff kontinuierlich extrudiert und in axialer Richtung (in der Zeichnung nach rechts) vorgeschoben werden kann. In einer Kühlvorrichtung, beispielsweise einem Sprühbad 12 wird das extrudierte Rohr 11 in an sich bekannter Weise abgekühlt. Ein Abzug 13 sorgt für den kontinuierlichen Vorschub des Rohrs. Der abgekühlte Rohrstrang wird dann mittels einer Trennvorrichtung, beispielsweise einer Säge 14 durchtrennt, so dass dann jenseits der Säge 14 ein Rohrstück 15 definierter Länge vorliegt, während vor der Säge ein kontinuierliches Kernrohr 11 vorliegt. Dieses Rohrstück 15 wird nach dem Trennvorgang mittels eines Drallabzugs 16 in Rotation versetzt, wobei es gleichzeitig einen axialen Vorschub in Produktionsrichtung (in der Zeichnung nach rechts) erhält. Das Rohrstück definierter Länge 15 bewegt sich somit weiter in Produktionsrichtung, wobei es um seine Achse rotiert. Aus der kontinuierlichen Extrusion wird dabei vom Extruder 10 ständig weiter ein Rohrstrang 11 produziert, der über den Abzug 13 axialen Vorschub erhält, sich jedoch nicht dreht. Dieser Rohrstrang wird dann immer an vorgegebenen Punkten jeweils mittels der Säge 14 abgelängt und dann von dem Drallabzug 16 erfasst, so dass letztendlich ein Rohrstück nach dem anderen in den Drallabzug 16 gelangt und es sich weiterhin um eine kontinuierliche Produktion handelt.

Als nächste Station ist eine Wickelvorrichtung 17 vorgesehen, der aus einem Bereich neben der Extrusionslinie ein Band 18 kontinuierlich zugeführt werden kann. Dieses Band 18 wird bevorzugt ebenfalls kontinuierlich vor Ort hergestellt mittels einer zweiten Extrusionsvorrichtung 19. Diese produziert ein flaches Band 18 oder auch ein Profil aus einem Verstärkungsmaterial, welches beispielsweise zunächst beim Verlassen des Extruders parallel zur Hauptextrusionslinie ausgerichtet sein kann und dann wie in der Zeichnung erkennbar umgelenkt wird in einem Bogen, so dass es dann in einem stumpfen Winkel der Wickelvorrichtung 17 zugeführt wird. Das Band 18 kann so spiralförmig auf das sich um seine Achse drehende und gleichzeitig in Produktionsrichtung geförderte Rohrstück 15 aufgewickelt werden, beispielsweise derart, dass die jeweiligen Wicklungen der Bandlage etwa auf Stoß aneinandergrenzen. Um eine stoffschlüssige Verbindung zwischen dem Band 18 und der Oberfläche des Rohrstücks 15 herzustellen ist eine Laserschweißvorrichtung 20 vorgesehen, mittels derer das Band 18 mit der Oberfläche des Rohrstücks 15 verschweißt wird. Dies hat gegenüber einer Erwärmung im Ofen den Vorteil, dass keine zu starke Erwärmung des Bands eintritt. Zur Verstärkung kann man daher Bänder 18 aus einem orientierten Material verwenden, welches zum Beispiel durch Verstrecken aus einem zuvor gewalzten Material erhalten wurde. Dieses orientierte Bandmaterial kann aus einem gleichen oder ähnlichen Werkstoff bestehen wie das Rohrstück, beispielsweise jeweils aus einem Polyolefin, so dass ein werkstoffhomogenes Rohr mit einer gewickelten Verstärkungslage hergestellt werden kann.

Nach Durchlaufen der Wickelvorrichtung 17 wird das umwickelte Rohrstück mittels einer weiteren Säge 21 durchtrennt, wobei bevorzugt dieser Trennschritt jeweils dort erfolgt, wo das Kernrohr jeweils endet, so dass nur die aufgewickelte Verstärkungsschicht durchtrennt werden muss. Dies lässt sich technisch beispielsweise dadurch lösen, dass eine entsprechende Streckenverfolgung vorgesehen ist, so dass der Vorschub des Rohrs in der Linie nachverfolgt werden kann und die Säge 21 den Trennschritt genau an der Stelle vornehmen kann, an der das Kernrohr unter der Wickelschicht endet.

Die Säge 21 verlässt somit ein mit einer ersten Verstärkungsschicht umwickeltes Rohrstück 22 definierter Länge, welches dann von einem weiteren Drallabzug 23 erfasst wird und in Rotation versetzt wird bei gleichzeitigem axialen Vorschub, allerdings wird das Rohrstück 22 nun im entgegengesetzten Drehsinn gedreht wie zuvor mittels des ersten Drallabzugs 16. Es ist eine weitere Extrusionsvorrichtung 24 neben der Extrusionslinie angeordnet, in der ein zweites Verstärkungsband 25 bevorzugt kontinuierlich extrudiert und dann in einem geeigneten stumpfen Winkel einer zweiten Wickelvorrichtung 26 zugeführt wird. Diese zweite Band 25 wird etwa tangential an das Rohrstück 22 herangeführt, welches sich um seine Achse dreht bei gleichzeitigem axialem Vorschub, so dass auch dieses zweite Band spiralförmig auf das Rohrstück aufgewickelt wird, und zwar über die erste Lage, die zuvor im ersten Wickelvorgang aufgewickelt wurde. Diese Wicklungen kreuzen sich somit jeweils mit den Wicklungen der ersten Bandlage. Nach dem zweiten Wickelvorgang wird mittels einer zweiten Laserschweißvorrichtung 27 die zweite Lage des Verstärkungsbands mit der Oberfläche des Rohrstücks 22 verschweißt. Dabei kann beispielsweise ein IR-Laser verwendet werden, dessen Strahlung selektiv in einer Teilschicht des Verstärkungsbands absorbiert wird, so dass es zu einer lokalen Erwärmung kommt, durch die ein Aufschmelzen und die Verschweißung erzielt wird, ohne dabei eine Orientierung im Bereich des Verstärkungsbands zu beeinträchtigen.

Danach erfolgt ein erneuter Trennvorgang mittels einer weiteren Säge 28, wobei bevorzugt erneut wieder dort, wo sich das Ende des Rohrstücks des Kernrohrs befindet, getrennt wird, so dass nur die äußere Umwicklung durchtrennt werden muss. Es wird dann erneut ein Rohrstück 29 definierter Länge erhalten, welches ein Kernrohr und zwei Verstärkungsschichten aus den beiden Lagen der aufgewickelten Verstärkungsbänder 18 und 25 umfasst. Der kontinuierliche Vorschub dieses Rohrstücks 29 wird fortgesetzt.

Es wird nun in der Folge auf die Figur 1b Bezug genommen. Aus Platzgründen ist in dem Ausführungsbeispiel die Extrusionslinie danach nicht in der Flucht sondern parallel dazu fortgesetzt, was aber für die vorliegende Erfindung keine weitere Bedeutung hat. Der Grund dafür liegt allein darin, dass die Extrusionlinie vergleichsweise lang ist und bei einer ungeteilten Linie eine größere Hallenlänge erforderlich wäre. Es ist also zu beachten, dass in der Zeichnung die Förderrichtung des Rohrs in der Extrusionslinie in Figur 1b entsprechend dem eingezeichneten Pfeil von rechts nach links ist, während in Figur 1b in entgegengesetzter Richtung gemäß Pfeil von links nach rechts gefördert wird. Ebenso gut könnte jedoch mit einer durchgehenden Extrusionslinie mit einheitlicher Förderrichtung gearbeitet werden.

Das Rohrstück 29 wird also mittels des Abzugs 30 in Figur 1b in Vorschub (in Pfeilrichtung nach links) versetzt, ohne dass es sich um die eigene Achse dreht. Es ist dann eine weitere Extrusionsvorrichtung 31 neben, in oder an der Extrusionslinie angeordnet, mittels derer eine Mantelschicht aus Kunststoff, beispielsweise aus Polyethylen, auf das Rohrstück 29 aufextrudiert wird, so dass danach ein verstärktes ummanteltes Rohrstück 32 erhalten wird, welches dann eine Kühlvorrichtung 33 mit beispielsweise einem Sprühbad durchläuft und somit abgekühlt wird. Durch die kontinuierliche Ummantelung des Rohrstücks 29 bei 31 wird danach wieder ein längerer Rohrstrang erhalten, da das Aufextrudieren kontinuierlich erfolgt und somit die Ummantelung sich auch fortsetzt, wenn das Rohrstück 29 definierter Länge durch die Extrusionsvorrichtung 31 durchgelaufen ist. Mit anderen Worten die Mantelschicht setzt sich auch über die Trennstelle zwischen zwei Rohrstücken 29 hinaus fort.

In dem vorliegenden Ausführungsbeispiel ist dann weiterhin vorgesehen, dass auf den zuvor ummantelten Rohrstrang 32 in einer sich in Förderrichtung anschließenden Wickelvorrichtung 34 eine metallische Folie aufgewickelt wird, beispielsweise eine Aluminiumfolie. Auch dieses Aufwickeln der metallischen Folie geschieht kontinuierlich bei kontinuierlichem rein axialen Vorschub des Rohrstrangs, unabhängig von den unter der Ummantelung liegenden Trennstellen zwischen den einzelnen Rohrstücken. Auf den mit metallischer Folie umwickelten Rohrstrang 35 wird danach mittels einer neben oder in der Extrusionslinie angeordneten weiteren Extrusionsvorrichtung 36 eine äußere Mantelschicht 37 aufgebracht, die dann in einer nachfolgenden Kühlvorrichtung 38, beispielsweise einem Sprühbad abgekühlt wird. In Förderrichtung im Anschluss an die Kühlvorrichtung 38 ist dann erneut eine Trennvorrichtung, beispielsweise in Form einer Säge 39 vorgesehen, mittels derer dann der ummantelte Rohrstrang in definierten Abständen durchtrennt werden kann und zwar vorzugsweise wiederum immer dort, wo die entsprechenden Trennstellen der nun umwickelten und ummantelten Rohrstücke 29 liegen, so dass nur die Mantelschichten und die Folien-Wicklung durchtrennt werden muss. Dazu ist beispielsweise wiederum eine Streckenverfolgung vorgesehen, so dass die Säge 39 an den entsprechenden Stellen ansetzen kann. Die gesamte weitere in Figur 1b dargestellte Extrusionslinie arbeitet somit mit einem kontinuierlichen axialen Vorschub. Nach der Säge 39 werden in kontinuierlicher Produktion ummantelte und umwickelte Rohrstücke 40 erhalten, die neben dem Kernrohr auch die Verstärkungsschichten enthalten. Diese Rohrstücke 40 können dann beispielsweise palettiert und für den Transport vorbereitet werden. Der gesamte in den Figuren 1 a und 1 b dargestellte Herstellungsprozess kann kontinuierlich verlaufen.

### Bezugszeichenliste

- 10: Extrusionsvorrichtung
- 11: Kernrohr
- 12: Sprühbad
- 13: Abzug
- 14: Säge
- 15: Rohrstück
- 16: Drallabzug
- 17: Wickelvorrichtung
- 18: Band
- 19: zweite Extrusionsvorrichtung
- 20: Laserschweißvorrichtung
- 21: Säge
- 22: Rohrstück
- 23: Drallabzug
- 24: weitere Extrusionsvorrichtung
- 25: zweites Verstärkungsband
- 26: zweite Wickelvorrichtung
- 27: zweite Laserschweißvorrichtung
- 28: Säge
- 29: Rohrstück
- 30: Abzug
- 31: Extrusionsvorrichtung
- 32: ummanteltes Rohrstück
- 33: Kühlvorrichtung
- 34: Wickelvorrichtung
- 35: umwickelten Rohrstrang
- 36: Extrusionsvorrichtung
- 37: äußere Mantelschicht
- 38: Kühlvorrichtung
- 39: Säge
- 40: umwickelte Rohrstücke

## Patentansprüche

1. Verfahren zur Herstellung von Kunststoffrohren oder Kunststoff/Metall-Verbundrohren, bei dem man wenigstens ein Verstärkungsmaterial in Form von Bändern oder Fasern auf einen extrudierten zylindrischen Rohrkern aus Kunststoff wickelt, wobei der Rohrkern während des Wickelvorgangs axial in Längsrichtung vorgeschoben wird und gleichzeitig um seine Längsachse rotiert, wobei man zunächst den Rohrkern (11) aus Kunststoff kontinuierlich und endlos extrudiert, wobei dieser zunächst nur axialen Vorschub aufweist, man dann den Rohrkern durchtrennt, das abgetrennte Rohrstück in Rotation versetzt und bei gleichzeitigem axialen Vorschub wenigstens eine Lage Verstärkungsmaterial (18) auf das Rohrstück (15) spiralförmig aufwickelt, man danach nur die Umwicklung an der Trennstelle des umwickelten Rohrkerns durchtrennt und man dann das abgetrennte umwickelte Rohrstück bei andauerndem rein axialen Vorschub durch Aufextrudieren mit wenigstens einer äußeren Kunststoffschicht überzieht.

2. Verfahren nach Anspruch 1, **dadurch gekennzeichnet, dass** man nach einem Trennschritt auf ein bereits mit wenigstens einer ersten Lage Verstärkungsmaterial (18) umwickeltes Rohrstück (22) wenigstens eine zweite Lage Verstärkungsmaterial (25) spiralförmig aufwickelt, wobei man bei axialem Vorschub das Rohrstück in Rotation im entgegengesetzten Drehsinn zum ersten Wickelvorgang versetzt.

3. Verfahren nach Anspruch 1 oder 2, **dadurch gekennzeichnet, dass** man einen um seine Achse rotierenden zylindrischen Rohrkern aus Kunststoff mit wenigstens einer Lage eines Verstärkungsmaterials (18, 25) aus Kunststoff umwickelt und ein durch einen Trennschritt abgetrenntes derart umwickeltes Rohrstück (29) in wenigstens einem weiteren Schritt mit einer metallischen Folie umwickelt.

4. Verfahren nach Anspruch 3, **dadurch gekennzeichnet, dass** man wenigstens eine metallische Folie auf das Rohrstück aufwickelt, nachdem man dieses mit wenigstens einer durch Aufextrudieren aufgebrachten Kunststoffschicht ummantelt hat.

5. Verfahren nach einem der Ansprüche 1 bis 4, **dadurch gekennzeichnet, dass** man ein mit Verstärkungsmaterial umwickeltes Rohrstück bei rein axialem Vorschub durch Aufextrudieren mit wenigstens einer ersten Kunststoffschicht ummantelt und in einem späteren Schritt dieses durch Aufextrudieren mit wenigstens einer weiteren Kunststoffschicht (37) aus einem von der ersten Schicht verschiedenen Kunststoff ummantelt.

6. Verfahren nach Anspruch 5, **dadurch gekennzeichnet, dass** man das Rohrstück durch Aufextrudieren mit wenigstens einer weiteren Kunststoffschicht (37) ummantelt, nachdem das Rohrstück mit einer metallischen Folie umwickelt wurde.

7. Verfahren nach einem der Ansprüche 1 bis 6, **dadurch gekennzeichnet, dass** das aufzuwickelnde Verstärkungsmaterial (18, 25) vor Ort mittels einer eigenen Extrusionsvorrichtung (19, 24) extrudiert wird, abgekühlt und gegebenenfalls in weiteren Schritten bearbeitet wird und in situ unmittelbar nach der Herstellung der Extrusionslinie in etwa quer zur Vorschubrichtung des Rohrstücks (15, 22) zugeführt wird.

8. Verfahren nach einem der Ansprüche 1 bis 7, **dadurch gekennzeichnet, dass** man wenigstens ein auf ein Kernrohr (11) aus Kunststoff aufgewickeltes Verstärkungsband oder Verstärkungsprofil (18, 25) aus einem mit dem Kunststoff des Kernrohrs kompatiblem Kunststoff, insbesondere aus einem Kunststoff mit gleicher oder ähnlicher chemischer Struktur nach dem Wickelvorgang mit dem Kernrohr verschweißt.

9. Verfahren nach einem der Ansprüche 1 bis 8, **dadurch gekennzeichnet, dass** man wenigstens ein auf ein Kernrohr (18, 25) aufgewickeltes Verstärkungsband oder Verstärkungsprofil aus Kunststoff nach dem Wickelvorgang mittels Laserstrahlung, vorzugsweise mit einer Wellenlänge im IR-Bereich, verschweißt.

10. Verfahren nach einem der Ansprüche 1 bis 9, **dadurch gekennzeichnet, dass** man während der laufenden Extrusion den Durchmesser und/oder die Wandstärke des extrudierten Rohrkerns um Dimensionen, insbesondere um einen Faktor 1,2 bis 2 vergrößert oder verkleinert und alle durchmesserabhängigen Einrichtungen in den nachfolgenden Stationen der Anlage, insbesondere Kalibriervorrichtungen, Vakuumsaugglocken, Kühlbäder, Führungen, Dichtungen, Abzüge, Sägen, Wickelvorrichtungen, und/oder Rohrkopf des Extruders in der Aufextrusionsanlage über eine zentrale Steuerung an den neuen Rohrdurchmesser anpasst.

11. Verfahren nach Anspruch 10, **dadurch gekennzeichnet, dass** man bei zunehmendem Durchmesser des Rohrkerns während der laufenden Produktion Breite und/oder Stärke wenigstens eines auf den Rohrkern gewickelten Verstärkungsbandes in Abhängigkeit von dessen Durchmesser vergrößert.

## Claims

1. A method for producing plastic tubes or plastic/metal composite tubes in which at least one reinforcement material in the form of bands or fibers is wrapped onto an extruded cylindrical tube core made of plastic, wherein the tube core is moved axially forwardly in the longitudinal direction during the wrapping process and rotates at the same time about its longitudinal axis, wherein first, the tube core (11) made of plastic is continuously and endlessly extruded, wherein the latter initially has only an axial feed, then, the tube core is cut through, the cut-off tube piece is rotated and during a simultaneous axial feed, at least one layer of reinforcement material (18) is spirally wrapped around the tube piece (15) and subsequently, only the wrapping is cut through at the cut-off point of the wrapped tube core and, during a continued purely axial feed, the cut-off wrapped tube piece is covered by extruding with at least one outer plastic layer.

2. The method according to claim 1, **characterized in that** after a cutting step, at least one second layer of reinforcement material (25) is spirally wrapped around a tube piece (22) which is already wrapped with at least one first layer of reinforcement material (18), wherein during an axial feed, the tube piece is put in rotation in the opposite rotational direction with respect to the first wrapping process.

3. The method according to claim 1 or claim 2, **characterized in that** a cylindrical tube core made of plastic rotating about its axis is wrapped with at least one layer of a reinforcement material (18, 25) made of plastic, and a tube piece (29) wrapped in this manner and cut off by a cutting step is wrapped in at least one further step with a metallic foil.

4. The method according to claim 3, **characterized in that** at least one metallic foil is wrapped around the tube piece after the latter is encased with at least one plastic layer applied by extruding.

5. The method according to any one of the claims 1 to 4, **characterized in that** a tube piece wrapped with reinforcement material is encased during a purely axial feed with at least one first plastic layer and in a subsequent step, said tube piece is encased by extruding with at least one further plastic layer (37) which differs from the plastic of the first layer.

6. The method according to claim 5, **characterized in that** the tube piece is encased by extruding with at least one further plastic layer (37) after the tube piece has been wrapped with a metallic foil.

7. The method according to any one of the claims 1 to 6, **characterized in that** the reinforcement material (18, 25) to be wrapped is extruded in situ by means of a dedicated extrusion device (19, 24), is cooled and optionally processed in further steps, and, directly after preparing the extrusion line, is fed in situ approximately transverse to the feed direction of the tube piece (15, 22).

8. The method according to any one of the claims 1 to 7, **characterized in that** at least one reinforcement band or reinforcement profile (18, 25) which is wrapped around a plastic core tube (11) and which is made of a plastic that is compatible with the plastic of the core tube, in particular of a plastic with the same or similar chemical structure, is welded after the wrapping process to the core tube.

9. The method according to any one of the claims 1 to 8, **characterized in that** at least one reinforcement band or reinforcement profile made of plastic wrapped around a core tube (18, 25) is welded after the wrapping process by means of laser radiation, preferably with a wave length in the IR range.

10. The method according to any one of the claims 1 to 9, **characterized in that** during the running extrusion, the diameter and/or the wall thickness of the extruded tube core is increased or decreased by dimensions, in particular by a factor 1.2 to 2, and all diameter-dependent devices in the subsequent stations of the plant, in particular calibration devices, vacuum suction cups, cooling baths, guides, seals, take-off units, saws, wrapping devices, and/or tube head of the extruder are adapted in the extrusion plant to the new tube diameter via a central control.

11. The method according to claim 10, **characterized in that** with increasing diameter of the tube core, width and/or thickness of at least one reinforcement band wrapped around the tube core is increased during the running production depending on the diameter of the tube core.

## Revendications

1. Procédé de fabrication de tuyaux en matière plastique ou de tuyaux composites en matière plastique et métal, dans lequel au moins une matière de renforcement sous forme de bandes ou fibres est enroulée sur un noyau tubulaire extrudé cylindrique en matière plastique, ledit noyau tubulaire étant avancé, durant l'opération d'enroulement, axialement dans le sens longitudinal tout en tournant autour de son axe longitudinal, d'abord ledit noyau tubulaire (11) en matière plastique étant extrudé de façon continue et sans fin, celui-ci ne présentant d'abord qu'une avance axiale, ensuite ledit noyau tubulaire étant coupé, le tronçon de tuyau séparé étant mis en rotation et, tout en réalisant une avance axiale, au moins une couche de matière de renforcement (18) étant enroulée en spirale sur le tronçon de tuyau (15), ci-après uniquement l'enveloppe sur le point de séparation du noyau tubulaire enveloppé étant coupée, et puis le tronçon de tuyau enveloppé séparé étant revêtu par extrusion, avec une avance persistante purement axiale, d'au moins une couche extérieure en matière plastique.

2. Procédé selon la revendication 1, **caractérisé par le fait que**, après avoir réalisé une étape de séparation, au moins une deuxième couche de matière de renforcement (25) est enroulée en spirale sur un tronçon de tuyau (22) déjà enveloppé d'au moins une première couche de matière de renforcement (18), ledit tronçon de tuyau - tout en étant avancé axialement - étant mis en rotation dans un sens de rotation opposé à celui de la première opération d'enroulement.

3. Procédé selon la revendication 1 ou 2, **caractérisé par le fait qu'**un noyau tubulaire cylindrique en matière plastique qui tourne autour de son axe est enveloppé d'au moins une couche d'une matière de renforcement (18, 25) en plastique et qu'un tronçon de tuyau (29) ainsi enveloppé séparé par une étape de séparation est enveloppé, dans une autre étape, d'une feuille métallique.

4. Procédé selon la revendication 3, **caractérisé par le fait qu'**au moins une feuille métallique est enroulée sur ledit tronçon de tuyau après avoir enveloppé celui-ci d'au moins une couche en matière plastique appliquée par extrusion.

5. Procédé selon l'une quelconque des revendications 1 à 4, **caractérisé par le fait qu'**un tronçon de tuyau enveloppé d'une matière de renforcement est enveloppé par extrusion d'au moins une première couche de matière plastique, l'avance étant purement axiale, et que celui-ci est enveloppé par extrusion, dans une étape ultérieure, d'au moins une autre couche de matière plastique (37) réalisée dans une matière plastique différente de celle de ladite première couche.

6. Procédé selon la revendication 5, **caractérisé par le fait que** le tronçon de tuyau est enveloppé par extrusion d'au moins une autre couche de matière plastique (37) après avoir enveloppé ledit tronçon de tuyau d'une feuille métallique.

7. Procédé selon l'une quelconque des revendications 1 à 6, **caractérisé par le fait que** ladite matière de renforcement (18, 25) à enrouler est extrudée sur place au moyen d'un propre dispositif d'extrusion (19, 24), est refroidie et, le cas échéant, usinée dans d'autres étapes et est amenée in situ, immédiatement après la réalisation de la ligne d'extrusion, à peu près transversalement à la direction d'avance du tronçon de tuyau (15, 22).

8. Procédé selon l'une quelconque des revendications 1 à 7, **caractérisé par le fait qu'**au moins une bande de renforcement ou un profilé de renforcement (18, 25) enroulé(e) sur un tuyau formant noyau (11) en matière plastique et réalisé(e) dans une matière plastique compatible avec la matière plastique du tuyau formant noyau (11), en particulier dans une matière plastique ayant une structure chimique identique ou similaire, est soudé(e) avec ledit tuyau formant noyau (11) après l'opération d'enroulement.

9. Procédé selon l'une quelconque des revendications 1 à 8, **caractérisé par le fait qu'**au moins une bande de renforcement ou un profilé de renforcement (18, 25) en matière plastique enroulé(e) sur un tuyau formant noyau est soudé(e), après l'opération d'enroulement, au moyen d'un rayonnement laser, de préférence d'une longueur d'onde dans l'infrarouge.

10. Procédé selon l'une quelconque des revendications 1 à 9, **caractérisé par le fait que**, durant l'extrusion en cours, le diamètre et/ou l'épaisseur de paroi du noyau tubulaire extrudé est/sont augmenté(e)s ou réduit(e)s de dimensions, en particulier d'un facteur compris entre 1,2 et 2, et que tous les dispositifs dépendant du diamètre situés dans les postes suivants de l'installation, en particulier les dispositifs de calibrage, les cloches aspiratrices à vide, les bains de refroidissement, les guides, les joints d'étanchéité, les évents, les scies, les dispositifs d'enroulement et/ou la tête de tuyau de l'extrudeuse dans l'installation destinée à l'application par extrusion, sont adaptés au nouveau diamètre du tuyau par l'intermédiaire d'une commande centrale.

11. Procédé selon la revendication 10, **caractérisé par le fait que**, dans le cas d'une augmentation du diamètre du noyau tubulaire durant la production en cours, la largeur et/ou l'épaisseur d'au moins une bande de renforcement enroulée sur ledit noyau tubulaire est/sont augmentée(s) en fonction du diamètre de celui-ci.
